# EUROPEAN PATENT APPLICATION

(11) **EP 2 073 165 A1**
(43) Date of publication of application: **24.06.2009**
(21) Application number: 08169171.9
(22) Date of filing: 14.11.2008
(51) Int. Cl.: G06Q 50/00

(54) **A method for reducing or limiting emissions**

(30) Priority: 13.12.2007 US 955712
(71) Applicant: The Bank of New York, New York, NY 10286 (US)
(72) Inventor: Arsiwala, Hozaifa, New York, NY 10022 (US)
(74) Representative: Freeman, Avi

(57) **Abstract**

The invention provides a method for reducing or limiting emissions which may be damaging to the environment. The method comprises accounting for environmental offset credits from multiple offset markets includes registering the offset credit; assigning a unique identifier; receiving notification of a pending trade between a buyer/seller of an offset in one of the multiple offset markets. If the seller has an amount of environmental offsets sufficient for the trade and the trade is consummated, buyer and seller accounts are adjusted with corresponding credits and debits. Otherwise, a notification of insufficient environmental offsets to carry out the trade is provided. In a further aspect, instead of receiving a notification of a pending trade, the trade may be executed. In another embodiment, a computer-implemented trading platform includes a processor; a memory with a structured database that stores information relating to two or more environmental offset credits established in the two or more different offset markets. A bid or ask quote for an environmental offset credit is received and a buyer is matched by the processor with a seller of based on the received bid or ask quote. If the seller has an amount of environmental offset credits sufficient for the trade, a trade of an environmental offset credit is executed between the buyer and the seller. Otherwise, a notification of insufficient environmental offset credits to carry out the trade is provided.

## Description

The invention relates to a method for reducing or limiting emissions which may be damaging to the environment. The emissions of greenhouse gases (GHG) by human activity is believed by many to contribute to global warming and climate change. Thus there is a serious technical problem to be addressed which is how to reduce or limit greenhouse gas emissions and indeed other emissions that may be harmful to the environment.

This application is directed to a computer-implemented system, and method useful in the control and limit of greenhouse gas emissions by the trading and accounting for environmental offsets, for example, so-called "carbon offset" emissions trading and acid-rain offsets. Emissions trading or "cap-and-trade" provides a solution to the technical problem of how to control pollution and it operates by providing economic incentives for achieving reductions in the emissions of pollutants.

While tree planting was initially used for carbon offsetting, renewable energy, energy conservation, and methane capture offsets have now become increasingly popular. Emissions reduction and regulation are primarily an engineering problem, however, it has been recognized that one way to address this engineering problem provides economic opportunity by the creation and trading, i.e., buying and selling, of emission offset credits. There are active trading programs in several pollutants. For GHG, the largest is the European Union Emission Trading Scheme (ETS). In the United States, there is a national market to reduce acid rain, and several regional markets to reduce nitrous oxide. Thus, there already exist plural systems for solving the technical problem of controlling, limiting or reducing potentially deleterious emissions.

As mentioned above, the emission of GHGs by human activity is believed to contribute to global warming and climate change. Greenhouse gases are typically measured by an internationally accepted measure, "carbon dioxide equivalent" (CO₂e or CDE), that expresses the amount of global warming potential of a particular GHG in terms of the amount of carbon dioxide (CO₂) that would have the same global warming effect. Examples of GHG's include carbon dioxide, methane, perfluorocarbons, nitrous oxide, sulfur hexafluoride, and water vapor. Carbon dioxide equivalents of these gases are commonly expressed by the United Nations' Intergovernmental Panel on Climate Change Panel (IPCC) as "billion metric tons of carbon dioxide equivalents (GtCO2eq)," in industry as "million metric tons of carbon dioxide equivalents" (MMTCDE), and in vehicles as "grams of carbon dioxide equivalents per kilometer" (gCDE/km).

The United Nations Framework Convention on Climate Change (UNFCCC) is an international environmental treaty produced at the United Nations Conference on Environment and Development in 1992. The treaty is aimed at reducing emissions of greenhouse gas in order to combat global warming. The treaty include provisions for updates called "protocols", the most famous of which is known as the "Kyoto Protocol" in which specific limits and reduction requirements have been established for the emission of carbon dioxide and five other greenhouse gases - methane, nitrous oxide, sulfur hexafluoride, HFCs, and PFCs - in countries that have ratified the Kyoto Protocol.

The Kyoto Protocol is a "cap-and-trade" system that defines legally binding national caps and timetables for reducing GHG emissions produced by industrialized countries that are subject to the Kyoto Protocol.

Emissions trading is available if countries maintain or increase emissions of the controlled GHGs. Kyoto includes "flexible mechanisms" which allow developed countries listed in Annex I of the Protocol to meet their emission caps by purchasing GHG emission reductions from elsewhere. These can be bought from financial exchanges, projects which reduce emissions in non-Annex I economies under the Clean Development Mechanism (CDM), other Annex I countries with excess allowances, or by over-the-counter (OTC) bi-lateral trades. Only CDM-accredited certified emission reductions can be bought and sold in this manner.

The CDM is an arrangement under the Kyoto Protocol that allows industrialized countries with a greenhouse gas reduction commitment to invest in projects that reduce emissions in developing countries as an alternative to more expensive emission reductions in their own countries. These "carbon projects" must first provide "additionality," i.e., that the reduction would not have occurred without the additional incentive provided by emission reduction credits available under the CDM. The CDM's purpose is to allow net global GHG emissions to be reduced at a much lower overall cost by financing emissions reduction projects in developing countries where costs are lower than in industrialized countries. Theoretically, since the CDM is an alternative to domestic emission reductions, the perfectly working CDM would produce no more and no less greenhouse gas emission reductions than without use of the CDM.

Under the CDM, flexible mechanisms for emission reductions are allowed, including verified emissions trading using Certified Emission Reduction (CER) credits that allow industrialized countries to find emissions reduction activities in developing countries as an alternative to domestic emission reductions. Further, Kyoto allows countries to join together in a cluster or "bubble" that is treated as a single entity for compliance purposes, such as the European Union (EU), which has created the ETS as a market-within-α-market. The currency used in the ETS scheme is the EU Allowance (EUA).

A similar approach called "Joint Implementation" (JI) applies in transitional economies mainly covering the former Soviet Union and Eastern Europe. Projects under the JI scheme produce Emission Reduction Units (ERU), which are currently valid for meeting EU ETS obligations. CERs/ERUs are generally bought from project developers by funds or entities, while EUAs are generally traded "OTC", but may also be exchange-traded.

A third mechanism is available under Kyoto using "International Emissions Trading" (IET), in which countries can trade in the international carbon credit market to cover their shortfall in allowances. Countries with surplus credits can sell them to countries with quantified emission limitation and reduction commitments under Kyoto.

In any case, the projects that qualify for offset credit must be verified or validated to some standard. Kyoto provides rigorous standards for validation of CDM projects by "Designated Operational Entities" (DOE) to ensure "additionality," along with documentation of the measurement and verification methodology applied, as outlined in the project development documentation.

Each country that participates in the mandatory Kyoto emission reduction framework and international emissions trading scheme maintains their emission allowances or "carbon credits" on the behalf of companies and the government in an electronic account known as a national registry. Under the Kyoto Protocol, the national registries may be linked with the central registry of the UNFCCC, the International Transaction Log (ITL). Various countries are also joined by the registry of the CDM, which holds carbon credits generated by CDM projects on behalf of project sponsors. In the case of the voluntary markets, voluntary registries may also be used. In either case, as a credit is "retired," the registries are updated accordingly. Computer interfaces are currently being developed to various national registries to supplement and/or replace the current paper and facsimile system.

The United States did not ratify Kyoto, and the federal government does not currently regulate carbon dioxide (CO₂) or other Kyoto GHGs as climate change-related pollutants. To compensate for the lack of national CO₂ regulation, several states have initiated their own regulatory processes, alone or in conjunction with others. For example, in 1997, Oregon enacted the Oregon Standard, the first regulation of CO₂ in the United States. The Oregon Standard requires that new power plants built in Oregon reduce their CO₂ emissions to a level 17% below those of the most efficient combined cycle plant, either through direct reduction or offsets. Plants may propose specific offset projects or pay mitigation funds to The Climate Trust, a non-profit entity created by law to implement projects that avoid, sequester, or displace CO₂ emissions.

On the East Coast of the United States, ten states are developing the Regional Greenhouse Gas Initiative (RGGI), a regional strategy to reduce CO₂ emissions utilizing a cap and trade system. This is set to be launched in January, 2009, and will initially focus on power plants that use fossil fuels to generate over half their electricity and have energy production capacity above 25 MW. The program may be extended to include other GHGs and offsets from projects and project-based transactions. The scheme has a sliding scale that permits the use of flexible mechanism credits based on market prices; the lower the price of emission reduction credits, the more restrictive the use of those credits.

California's Global Warming Solutions Act is the first US state-wide program to cap all GHG emissions from major industries that includes penalties for non-compliance. Under the Act, the California's State Air Resources Board (CARB) is required to create, monitor and enforce a GHG emissions reporting and reductions program. CARB is authorized to establish market-based compliance mechanisms to achieve reduction goals. There is a strong possibility this will include other US States. For example, California has joined five other states (New Mexico, Oregon, Washington, Arizona, Utah) and two Canadian provinces (British Columbia, Manitoba) in the Western Regional Climate Action Initiative (WRCAI), which formed in February, 2007, and is expected to announce an overall regional reduction goal, followed by a market-based reduction mechanism thereafter.

In mid- 2007, thirty-one U.S. states signed onto The Climate Registry. Like the California Climate Action Registry, this Multi-State-and-Tribe Registry was created to provide an accurate, complete, consistent, transparent and verified set of GHG emissions data from reporting entities, supported by an accounting and verification infrastructure developed to facilitate regulatory or voluntary reporting. While the Registry is not currently being utilized by a cap-and-trade system, it is possible that it will become part of such an initiative. Moreover, the popularity of this initiative signals that such registries will likely continue to play a key role in the United States, not only in potential regulatory markets but also in voluntary market efforts. States which have signed on to the Registry have agreed to a series of goals including to establish and endorse a voluntary entity-wide greenhouse gas emissions reporting and verification system.

Outside of Kyoto's mandatory emissions reduction and the above-described governmental efforts at the state and regional levels, several voluntary market mechanisms have developed, and are rapidly evolving. Using different verification approaches, these voluntary systems have evolved to allow companies or entities in countries not listed in Annex I of the Kyoto Protocol (e.g., Australia and the United States, primarily) to participate in emission reductions in anticipation of future "green" mandates, to fulfill corporate social responsibility, or to improve their image in the public eye, as well as allowing entities already subject to mandatory emission reduction schemes, *e*.*g*., EU ETS, to further reduce their GHG emissions beyond Kyoto Protocol requirements. The first voluntary efforts were implemented by Land Use, Land Use Change and Forestry (LULUCF) methodologies, which generally were focused on the planting of trees to provide carbon offsets.

The standards and certification schemes for the voluntary carbon market can be divided into two broad categories. First, there are those whose purpose is to certify the quality of the offsets and the projects that generate them. These include the Voluntary Carbon Standard, the Gold Standard, Plan Vivo, the Climate, Community, and Biodiversity Standard, and, to some extent, the California Climate Action Registry's offset-related protocols.

The second set of standards focuses more on certifying offset sellers, products, services, and/or the claims of carbon neutrality being made by individuals and institutions. These include the Green- e for GHG Product Standard, the United Kingdom's Department for Environment and Rural Affairs (DEFRA) Guidelines, and the Climate Neutral Network. The Australian Greenhouse Friendly program certifies both offset projects and greenhouse neutral products and services, and therefore fits in both categories.

The various voluntary reduction schemes or "carbon markets" use different formal standards (also called protocols) for quantification of offsets, now being developed based on collaboration between emitters, regulators, environmentalists, and project developers. These standards include, for example, the Voluntary Carbon Standard (VCS) sponsored by the International Emissions Trading Association (IETA), the Climate Group, and the World Economic Forum; ISO 14064 sponsored by the International Standards Organization; the "Gold Standard for Voluntary Emissions Reductions", sponsored by the Gold Standard Foundation; "VER +", sponsored by TÜV SÜD; and the Voluntary Offset Standard (VOS), sponsored by the International Carbon Investors and Services (INCIS), formerly the European Carbon Investor Services (ECIS). Some of these standards impose the same "additionality" requirement as in the CDM, while ISO 14064, for example, specifies its own requirements.

As a general class, voluntary carbon markets include all carbon offset trades that are not required by regulation. Voluntary market transactions include: the purchase of carbon credits by individuals or institutions at a retail level to offset their emissions; the purchase of credits directly from project developers for retirement or resale; and the donation to GHG reduction projects by corporations in exchange for credits. At the broadest level, the voluntary carbon markets can be divided into two main segments: the voluntary, but legally binding, cap-and-trade system that is the Chicago Climate Exchange (CCX); and the broader, non-binding, over the counter (OTC) offset market.

The voluntary market in North America currently resides mostly in the legally non-binding over-the-counter (OTC) market, while a smaller portion is traded under the voluntary but legally-binding cap-and-trade Chicago Climate Exchange (CCX) mechanism. The voluntary OTC offset market grew by over 200% between 2005 and 2006. Although less than the EU ETS trading volume, the voluntary markets are significant in that they represent an active and growing demand by businesses and individuals for carbon offset trading.

A summary of various offset standards for the U.S. Voluntary Carbon Offset Market is provided in TABLE 1, below. This listing is not intended to be all inclusive, as standards may evolve or be created or abandoned over time.

| **Table I - Certification Programs/Standards for the US Voluntary Carbon Offset Market** | | | | | | |
|---|---|---|---|---|---|---|
| | **Description** | **Focus on Env. & Social Benefits** | **Reporting Registration** | **Cert. Logo ?** | **Includes LULUCF Methodology?** | **Geographical Reach** |
| Gold Standard | Certification for offset projects & carbon credits | Yes | VER registry in development | Yes | Forestry and land-use projects are excluded | International |
| The VCS | Certification for offset projects & carbon credits | No | Use Bank of New York; other registry TBD | Yes | Yes, Methodologies TBD | International |
| Green-e | Certification program for offset sellers | No | Registry Incorporated | Yes | Accepts other standards that include LULUCF | Aimed at N.A., International possibilities |
| CCB Standards | Certification program for offset projects | Yes | Projects on Website | Yes | Only LULUCF | International |
| CCX | Internal system for CCX offset projects & CCX carbon credits | No | Registry Incorporated w/trading platform | No | Yes | International |
| Plan Vivo | Guidelines for offset projects | Yes | No | No | Community based agro forestry | International |
| Climate Neutral Network | Certification program for offset sellers & carbon neutral products | No | No | Yes | Yes | Primarily North America |
| Green-house Friendly | Certification program for offset sellers & carbon neutral products | No | No | Yes | Yes | Australia |
| WBCSD/ WRI Protocol | A set of guidelines for projects & corporate GHG accounting | No | Does not include registry | No | Protocol created for LULUCF | International |
| CCAR | A Registry Protocol | No | Reporting protocols used as standards | No | Yes, first protocol | Currently California |
| VER+ | Certification program for offset projects, carbon credits & carbon neutral products | No | TÜV SÜV Blue Registry | Yes | Includes a JI or CDM methodologies | International |
| ISO 14064 | Certification program for emissions reporting offset projects, carbon credits | No | No | No | Yes | International |
| VOS | Certification for offset projects & carbon credits | No | TBD | No | Follow CDM or JI methodologies | International |
| Social Carbon | Certification for offset projects & carbon credits | Yes | Creating its own registry system | Yes | Reforestation & Avoided deforestation | South America & Portugal |
| DEFRA | Proposed consumer code for offsetting & accounting | No | Does not include a registry | No | Follow CDM/JI standards | UK |

From an economic or market perspective, there is a distinction between a mandatory market and a voluntary market. Typically both markets deal with emission certificates of some form, but in the mandatory market, strict rules have been applied for a project approval and accounting, *i*.*e*., "verification." The voluntary market provides companies and countries with different options to acquire emissions reductions, and include solutions comparable to those developed for the mandatory market, for example, Verified Emission Reductions (VER). However, there are multiple "standards" in play, with differing scope.

The quality of offsets is, and will likely continue to be, an important issue for both buyers and sellers in the voluntary market and will help determine how the voluntary market continues to grow, and will also be a factor in setting the price in the market. Issues that determine quality of offsets in this market include additionality (would the reductions have happened anyway with or without the offset purchases), third party certification and verification, standards, and avoidance of double-counting and double-selling of offset credits (*i*.*e*. use of registries).

CERs and ERUs derived from the mandatory CDM and JI programs can also be sold on the voluntary markets. In 2006, the CDM transacted credits valued at around US$5 billion representing reductions of 450 MtCO2e. Some of these credits were further sold into a growing secondary market which traded 25 MtCO2e of secondary CDM credits, valued at US$ 444 million. The average CER price in 2006 was US$10.90.

The Chicago Climate Exchange (CCX) defines itself as "the world's first and North America's only voluntary, legally-binding, rules-based greenhouse gas emission reduction and trading system." CCX is driven by a membership-based cap and trade system. Members voluntarily join CCX and sign up to its legally-binding reductions policy. Like the Kyoto markets, CCX trades 6 different types of GHGs converted into a common unit of tCO2e. The CCX's unit of trade is the Carbon Financial Instrument (CFI), which represents 100 tCO2e. CCX CFIs can be either allowance-based credits, issued by emitting members in accordance with their emission baseline and the exchange's reduction goals, or offset credits generated from qualifying emission reduction projects. In 2006, about 10.3 MtCO2e were transacted on CCX. As of July 2007, a total of 26.3 MtCO2e had been traded on the exchange.

While all CCX credits are transacted voluntarily, the exchange does have links to the regulated markets and even accepts EUAs. In 2006, at least 1,000 EUAs were transferred into the CCX. However, at the end of 2006, as EUA prices for 2007 contracts dramatically fell, this link between markets was suspended.

As can be seen from the above, the carbon offset market is complex, with many interrelationships between mandatory emission reduction schemes, and voluntary efforts used to either supplant mandatory requirements or to pursue emission reductions in lieu of mandatory requirements in, for example, the United States. Capturing offset data and accounting for the variety of mandatory and voluntary emission offsets and their various standards for investors and traders can be difficult, but is necessary to ensure liquidity and transparency in offset trading. In addition it serves to provide a means by which the technical problem of how to reduce or control emissions can be addressed.

There is a widely-held belief that, to be meaningful, any sustainable emission reduction effort must be implemented by a market driven approach that provides economic incentives for compliance. This is particularly true for the generally unregulated voluntary offset market in which market transparency is necessary for investors/traders to have faith in offset pricing mechanisms and the underlying quality of the offset.

Transparency applies not only to the valuation of voluntary offsets, but to the related aspects of the underlying standards to which an offset was initially verified to ensure, *inter alia*, that an offset represents a "real" project which offers "additionality", for example, and also ensures that no double counting is allowed occurs when an offset is created or "retired." Providing such transparency provides a method and apparatus by which the technical problem of how to reduce or control emissions can be addressed and in addition works to ensure a liquid market where buyers and sellers can freely engage with reduced investment risk.

Thus, the invention provides a method and system by which the emission of greenhouse gases and other such environmentally deleterious emissions can be controlled and limited. The invention provides a solution to the technical problem of controlling and limiting environmental emissions. In contrast to other solutions to this problem such as methane capture, carbon capture, tree planting etc., in embodiments, the solution provided by the present invention may be implemented with the use of computers. The actual contribution provided by embodiments of the invention is a new and inventive method and apparatus by which the emission of greenhouse gases and other such environmentally deleterious emissions can be controlled and/or limited.

According to a first aspect of the present invention, there is provided a method of controlling and limiting environmental emissions using environmental offset credits established in one or more offset markets, the method comprising registering an environmental offset credit to an owner thereof; assigning a unique identifier to the environmental offset credit; receiving instructions of a pending trade of the environmental offset credit between a buyer and a seller; if the seller has an amount of environmental offset credit sufficient for the trade, adjusting buyer and seller accounts with corresponding credits and debits; otherwise, providing a notification of an insufficient environmental offset credit to carry out the trade, thereby providing controls and limits on environmental emissions.

The environmental offset credit may comprise a carbon offset. Preferably the carbon offset credit comprises a CFI carbon credit issued by the Chicago Climate Exchange. In one embodiment, the carbon offset credit comprises a Certified Emission Reduction (CER) or Emission Reduction Unit (ERU) compliant under the Kyoto Protocol.

Preferably, the environmental offset credit is a verified offset.

Preferably, the environmental offset credit has been verified using a verification standard compliant under the Kyoto Protocol.

Preferably, the method further comprises crediting a client account with the environmental offset credit.

In one embodiment, the environment offset credit has been verified under a voluntary offset scheme.

Preferably, the environmental offset credit comprises a carbon offset verified using the VER + standard.

Preferably, the environmental offset credit comprises a carbon offset verified using the Voluntary Offset Standard (VOS).

Preferably, the environmental offset credit comprises a carbon offset verified using the Voluntary Carbon Standard (VCS).

In one embodiment, the environmental offset credit comprises an acid rain offset.

Preferably, the method further comprises registering a plurality of environmental offsets to respective owners thereof, wherein two or more of the environmental offsets have been verified under different voluntary standards.

Preferably, the method further comprises registering a plurality of environmental offset credits to respective owners thereof, wherein two or more of the environmental offset credits are traded in at least two different offset markets. The trade notification may comprise price and quantity information.

Preferably, the environmental offset credit is a governmentally-regulated offset credit, and wherein the method further comprises providing an update to one or more associated national offset registries.

According to a second aspect of the present invention, there is provided a method of trading and accounting for environmental offset credits established in two or more different offset markets, the method comprising registering, in a database, a plurality of environmental offset credits established in the two or more different offset markets; assigning each of said plurality of environmental offset credits with a unique identifier; receiving a bid or ask quote for one of the plurality of environmental offsets established in one of the two or more different offset markets; matching a buyer with a seller of said one of the plurality of environmental offset credits based, at least in part, on the received bid or ask quote; if the seller has an amount of environmental offset credits sufficient for a trade, executing a trade of said one of the plurality of environmental offset credits between the buyer and the seller; and otherwise, providing a notification of insufficient environmental offset credits to carry out the trade to at least the seller.

Preferably, the method further comprises entering an offsetting credit and debit of the traded environmental offset credit to respective client accounts maintained in the database.

Preferably, the method further comprises providing a notification of the traded environmental offset credit to the buyer and seller.

Preferably, the method further comprises providing a notification of the traded environmental offset credit to a national registry associated with said one of the plurality of environmental offset credits. In one embodiment, said providing a notification comprises providing an electronic notification to the associated national registry via a computer network.

The method may comprise executing, between at least one different buyer or seller, multiple trades of different environmental offset credits verified under different standards.

In one embodiment, the method comprises computing an offset credit amount and cash value to be applied to the executed trade.

In one embodiment, the method further comprises performing a clearing and netting operation to consolidate and report trades between at least a first buyer-seller pair during a predetermined time period. In one embodiment, the method further comprises converting a physical offset certificate associated with the traded environmental offset credit into a book-entry form maintained in the database. In an embodiment, said one of the plurality of environmental offset credits has been established under a regulated mandatory scheme. Preferably, said one of the plurality of environmental offset credits has been established under a voluntary offset scheme.

In one embodiment, said plurality of environmental offset credits established in the two or more different offset markets have been established under two or more voluntary offset schemes selected from the group consisting of a Gold Standard, a Voluntary Carbon Standard (VCS), a Green-e standard, CCB standards, Plan Vivo, Climate Neutral Network, Greenhouse Friendly, WBCSD/WRI Protocol, CCAR, VER + standard, ISO 14064, VOS, Social Carbon, and DEFRA.

Preferably, the method further comprises storing, in the database, a record of current and historical offset credit positions and prices for one or more clients.

The method may comprise providing client position statements relating to one or more of the plurality of environmental offset credits established in the two or more different offset markets. Preferably, the method further comprises prior to said executing a trade, confirming that related offset documentation is complete, and scanning said completed related offset documentation to said database.

According to a third aspect of the present invention, there is provided a computer-implemented platform useful in controlling and limiting environmental emissions for environmental offset credit trades made in two or more offset markets, the trading platform comprising one or more processors; a memory operatively coupled to the one or more processors, said memory comprising a structured database therein configured to store information relating to one or more environmental offset credits established in the two or more different offset markets; an interface to the one or more processors configured to forward a bid and/or ask quote for one of the two or more environmental offset credits to said one or more processors, said one or more processors matching a buyer with a seller of said one of the two or more environmental offset credits based, at least in part, on the received bid or ask quote, said one of the two or more environmental offset credits being established in one of the two or more different offset markets; wherein, if the seller has an amount of environmental offset credits sufficient for the trade, the one or more processors generates a signal that indicates, to at least the seller, that sufficient environmental offsets are available to carry out a trade of said one of the two or more environmental offset credits between the buyer and the seller, and wherein, if the seller does not have an amount of environmental offset credits sufficient for the trade, the one or more processors generates a signal that indicates, to at least the seller, that insufficient environmental offsets are available to carry out the trade, thereby controlling and limiting environmental emissions.

Preferably, the one or more processors executes a trade of said one of the two or more environmental offset credits between the buyer and the seller if the seller has an amount of environmental offset credits sufficient for the trade. Preferably, the one or more processors are configured to credit a client account, in the structured database, with a traded environmental offset credit.

The one or more processors may be configured to compute an offset credit amount and cash value to be applied to the executed trade. Preferably, the one or more processors are configured to enter an offsetting credit and debit of the traded environmental offset credit into respective client accounts maintained in the structured database.

In one embodiment, the one or more processors are configured to provide a notification of the traded environmental offset credit to the buyer and seller via a network. Preferably, the one or more processors are configured to provide, via a computer network, an electronic notification of the traded environmental offset credit to a national registry associated with a traded environmental offset credit.

In an embodiment, the one or more processors are configured to perform a clearing and netting operation to consolidate and report trades between at least a first buyer-seller pair during a predetermined time period.

In an embodiment, the one or more processors are configured to store information representing a physical offset certificate associated with a traded environmental offset credit into a book-entry form maintained in the structured database.

The one or more processors may be configured to register, in the structured database, an environmental offset credit to an owner thereof and to assign a unique identifier to the environmental offset credit.

Preferably, the unique identifier comprises either a CUSIP or an ISIN identification number.

In an embodiment, the one or more processors are configured to execute, between at least one different buyer or seller, multiple trades of different environmental offset credits verified under different standards.

Preferably, said structured database stores information relating to a plurality of environmental offset credits established in the two or more different offset markets and established under two or more voluntary offset schemes selected from the group consisting of a Gold Standard, a Voluntary Carbon Standard (VCS), a Green-e standard, CCB standards, Plan Vivo, Climate Neutral Network, Greenhouse Friendly, WBCSD/WRI Protocol, CCAR, VER + standard, ISO 14064, VOS, Social Carbon, and DEFRA.

In an embodiment, the one or more processors are configured to provide client position statements relating to one or more of the plurality of environmental offset credits established in the two or more different offset markets.

According to a fourth aspect of the present invention, there is provided a method of converting an environmental offset credit, the method comprising retiring an offset credit verified under a first verification standard; verifying a new offset credit under a second verification standard, said new offset credit being essentially equivalent to the first offset credit at least in terms of representing a desired reduction in emissions; and thereafter, registering the new offset credit in a registry to an owner thereof.

Preferably, the first and second verification standards comprise different voluntary carbon standards.

A number of aspects of the invention are included. A number of features are also disclosed as preferable or as an embodiment. It will be understood that any one or more of the features disclosed as preferable or an embodiment may be combined with one or more other such features together with the appropriate aspect(s) of the invention.

Among other things, this disclosure provides embodiments of a trading platform, system, and method for trading and accounting for environmental offsets, for example, voluntary carbon emission offsets trading. The present disclosure also provides embodiments of a trading platform, system, and method which accounts for different voluntary offset standards, and which consolidates a variety of pricing data. The present disclosure also provides embodiments directed to a computer-implemented trading platform and method that facilitates the trading of carbon offsets between buyers and sellers. In one embodiment, the system maintains safe custody of offset documentation and certificates, and reports trades to the appropriate national registry for regulated programs and, in a further aspect of an embodiment, the system may provide registry services for voluntary offset programs.

In one embodiment, a method of accounting for environmental offsets established in one or more offset markets includes registering an environmental offset to an owner thereof; assigning a unique identifier to the environmental offset; crediting a client account with the environmental offset; receiving notification of a trade between a buyer and a seller; if the seller has an amount of environmental offsets sufficient for the trade, adjusting buyer and seller accounts with corresponding credits and debits; otherwise, providing a notification of insufficient environmental offsets to carry out the trade.

In another embodiment, a method of trading and accounting for an environmental offset that may be established in one of any number of different offset markets includes registering, in a database, a plurality of environmental offsets each established in a particular one of two or more different offset markets; assigning each of said plurality of environmental offsets with a unique identifier; receiving a bid or ask quote for one of the plurality of environmental offsets; matching a buyer with a seller of said one of the plurality of environmental offsets based, at least in part, on the received bid or ask quote; if the seller has an amount of environmental offsets sufficient for the trade, executing a trade of said one of the plurality of environmental offsets between the buyer and the seller; and otherwise, providing a notification of insufficient environmental offsets to carry out the trade to at least the buyer and seller.

In another embodiment, a computer-implemented trading platform useful in trading and accounting for environmental offset trades made in two or more offset markets includes one or more processors; a memory operatively coupled to the one or more processors, said memory comprising a structured database therein configured to store information relating to two or more environmental offsets established in the two or more different offset markets; an interface to the one or more processors configured to receive a bid or ask quote for one of the two or more environmental offsets established in one of the two or more offset markets and to match a buyer with a seller of said one of the two or more environmental offsets based, at least in part, on the received bid or ask quote; wherein, if the seller has an amount of environmental offsets sufficient for the trade, the one or more processors execute a trade of said one of the two or more environmental offsets between the buyer and the seller, and otherwise, providing a notification of insufficient environmental offsets to carry out the trade to at least the buyer and seller.

In another embodiment, a method of converting an environmental offset credit includes retiring an offset credit verified under a first verification standard; verifying a new offset credit under a second verification standard, said new offset credit being essentially equivalent to the first offset credit at least in terms of representing a desired reduction in emissions; and thereafter, registering the new offset credit in a registry to a owner thereof. In another aspect of this embodiment, the first and second verification standards may be different voluntary carbon offset standards.

Thus, in all embodiments the invention provides a solution to the technical problem of limiting or controlling the emission of potentially deleterious environmental emissions. The actual contribution provided by embodiments of the invention is a new and inventive method and apparatus by which the emission of greenhouse gases and other such environmentally deleterious emissions can be controlled and limited. Such a contribution, provides a solution to a technical problem.

The trade platform and method of this disclosure provides various capabilities as discussed more fully in the detailed description, and as summarized below:
- Trading: Facilitate the trading of carbon offsets between buyers and sellers.
- Verification: Verify that all required documentation is received and offsets have been verified by a recognized verification agent.
- Custody: Safe custody of offset documentation and certificates. Each offset certificates may be assigned a unique International Securities Identifying Number (ISIN) or Committee on Uniform Security Identification Procedures alphanumeric identifier (CUSIP).
- Offset Account: Once registered with the trade platform, offsets can be traded between market participants and electronic transfers can be performed between accounts.
- Registry: For regulated programs, the trade is reported to the appropriate national registry and for voluntary programs, the platform can serve as the registry of record.
- Certificate Delivery: If requested, upon the sale of the offset, the certificate can be delivered back with the account holding amended accordingly.
- Retirement Account: Offsets can be retired on behalf of investors, as directed.
- Settlement: Computation and verification of all trades /retirements, computation of cash and securities settlement amounts, and facilitation of movement of cash and securities.
- Electronic Statements and Reporting: Records of current and historical offset positions and movements.
- Historical Price and Volume Data: Blinded (hides details of participants) history of prices and trade volume.
- Opt-in for Available Inventory: Participants that opt-in can have their available inventory for trading/retirement made available to all market participants.

FIG. 1 provides a block diagram of an embodiment of a computer-implemented trading platform;

FIG. 2 illustrates a combined high-level process flow of two embodiments of a trading platform directed to primary registration functions and secondary trading functions, respectively;

FIG. 3 is a functional flowchart of an embodiment of a registration process for voluntary offsets;

FIG. 4 is a functional flowchart of an embodiment of a registration process for regulated offsets;

FIG. 5 is a functional flowchart of an embodiment of an offset retirement process;

FIG. 6 is a functional flowchart of an embodiment of a post-trade process;

FIG. 7 is a functional flowchart of an embodiment of an offset trade process;

FIG. 8 is a functional flowchart of an embodiment of a netting and settlement process;

FIG. 9 is a functional flowchart of an embodiment of a reporting process; and

FIG. 10 is a functional flowchart of an embodiment of a market data reporting process.

In the discussion of various embodiments it will be apparent that each of the embodiments provides a solution to the technical problem of controlling or limiting the emissions of greenhouse gases and other such environmental emissions. In some embodiments the invention includes a computer-implemented platform which may include a computer arranged to perform specific tasks and steps to enable the method to operate. Thus, technical means are provided and used in the solution of the technical problem.

In the discussion of various embodiments and aspects of the trade platform and method of this disclosure, the "starting point" is not required to be at the project level, i.e., at a level that is creating a new offset credit. Instead, the method and trade platform of this disclosure may alternatively start processing at a point where the owner of an existing offset credit desires to trade the already established and verified offset credit. Further, while various embodiments below indicate the use of a broker/dealer ("B/D"), an investor may register an offset directly with the platform manager ("P/M") and avoid the use of a B/D, if desired.

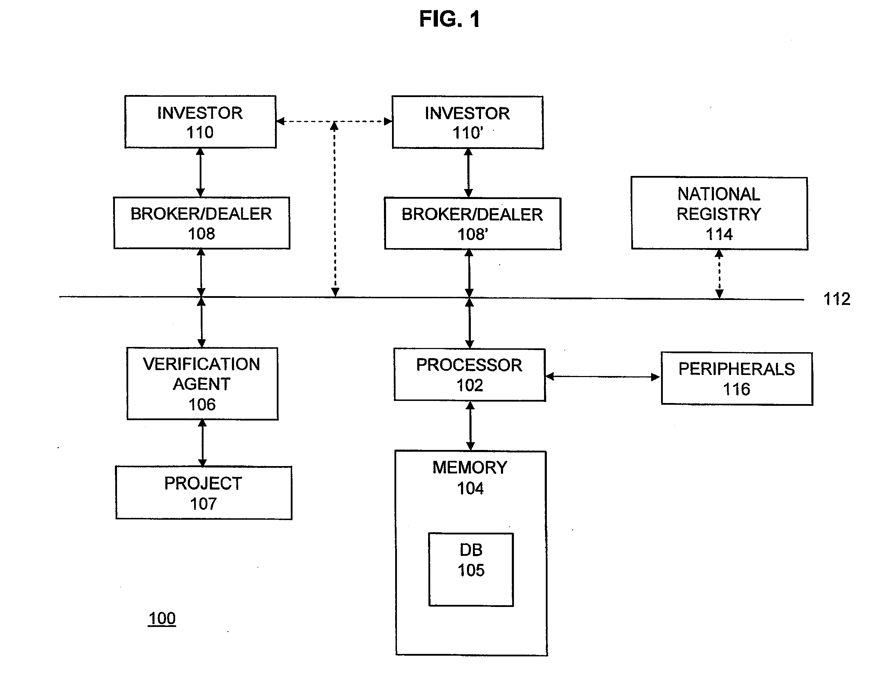

In the embodiment of FIG. 1, offset trading platform 100 includes processor 102 operatively connected to memory 104. Verification agent 106 is an independent entity that verifies that a carbon offset project 107 meets established criteria under a particular standard or protocol. For simplicity, only one verification agent 106 and project 107 are illustrated. For each of multiple projects 107, a different verification agent 106 may be used to account for the use of a different type of offset credit and its associated certification standard and/or verification procedures.

For example, the Gold Standard relies upon a Designated Operational Entity (DOE) approved under the CDM to certify offset projects. A DOE is either a domestic legal entity or an international organization accredited and designated by the Executive Board of the CDM. A DOE has two key functions: (1) the DOE validates and subsequently requests registration of a proposed emission reduction project activity; and (2) it verifies emission reduction of a registered emission reduction project activity and certifies offset credits accordingly. Any legal entity (either a domestic legal entity or an international organization) may apply for accreditation/designation as a DOE.

As another example, verification of projects under the Voluntary Carbon Standard (VCS) also uses validators and verifiers approved under the CDM, *i*.*e*., a DOE, and also allows use of Accredited Independent Entities (AIE) approved under Joint Implementation (JI). The founders of the VCS are also considering allowing project verification by Certification Bodies (CBs) approved under the Californian Climate Action Registry.

As another example, Plan Vivo certificates are only issued to projects that have been approved by "BR&D," an independent non-profit organization established in 2001 to promote and regulate Plan Vivo activities. BR&D has defined certain requirements for approval of projects under the Plan Vivo scheme, which include establishing a legal, administrative, and financial framework suitable for transacting carbon from multiple landowners to purchasers; having one or more approved technical specifications that describe the forestry / agroforestry activities being undertaken by the project participants and the associated carbon benefits; establishing a team capable of assisting communities or farmers' groups with the planning and implementation of forestry activities, monitoring progress, assisting with technical problems and administration of payments; and having adequate internal systems for recording agreements, monitoring progress, corrective actions and carbon payments, including approval of the project database by BR&D. Prior to approval of the project, BR&D will conduct or commission a visit to the project to assess whether these requirements have been met.

Notwithstanding a particular verification agent that is implicated for verification of a specific regulated or voluntary offset standard, acknowledgement of project verification may be provided, for example, manually via paper or facsimile, or, as the offset credit market matures further, acknowledgement of the verification of an offset credit may be provided in an automated manner, for example, by computer-to-computer communication via network 112 (*e*.*g*., the internet), using known communication protocols (*e*.*g*., TCP/IP).

Broker/Dealer(s) 108, 108' represent entities that either facilitate identification of emission offsets and/or project(s) 108 where emission offsets might be available or appropriate, and assists, in some situations, in bringing a buyer and seller together to conduct a trade of an emission offset. Broker/Dealers 108, 108' refers to offset broker-dealers and retail offset providers. Buyers and sellers of offsets in an offset market, also called investors 110, 110', may enter into a trade relationship without the assistance of broker/dealers 108, 108', as denoted by the dashed lines between investors 110, 110' and network 112 in FIG. 1. Investors 110, 110' may include corporations, individuals, carbon funds, project sponsors, and/or other broker/dealers. Processor 102, verification agent 106, broker/dealers 108, 108' may be interconnected via network 112 in a known manner through appropriate computer interfaces using, for example, the internet and TCP/IP communication protocols.

An interface with national registry 114 is shown in dashed lines to indicate that such an interface is not applicable to all offset trades, but may be applicable only to offsets traded under a mandatory or regulated scheme, or under a voluntary scheme with a pre-existing registry. This depiction of a "national registry" may also represent such a pre-existing voluntary registry.

Memory 104 may be, for example, known types of solid-state memory such as dynamic random access memory (DRAM) that stores information, including information formatted for storage in structured database 105. Memory 104 may be backed up by known redundant storage media, *e*.*g*., tape backup (not shown). Structured database 105 may be implemented, for example, as a Structured Query Language (SQL) database or other type of known database format that is compatible or desired to be used with the particular software programming approach used to implement the trade platform. Structured database 105 may be configured to store information including, for example, information relating to multiple investors 110, multiple offset projects 108 and associated offset units, *e*.*g*., CER, ERU, *etc*., the various verification standards and verification agents 106 associated with the various offset projects, multiple broker/dealers 108, the status of any previously traded and/or expired voluntary offset in a registry-type format, and any national registry associated with a mandatory or regulated offset scheme.

Peripherals 116 are operatively connected to processor 102 and may include, for example, display(s), a keyboard or other input devices, additional memory, scanner, e-mail capability, and/or hard disk storage. Processor 102 may be part of a personal computer, computer workstation, or mainframe computer, and may also represent multi-processor configurations useful, with proper programming, to improve processing speed.

The operation of an embodiment will now be described. Computer-implemented trading platform 100 is useful in trading and accounting for environmental offset trades made in two or more offset markets, and includes one or more processors 102. Memory 104 is operatively coupled to processor 102, and includes structured database 105 configured to store information relating to multiple environmental offsets established in the same or in multiple different offset markets. An interface between processor 102 and network 112 allows receipt of a bid or ask quote for environmental offsets from B/D 108, 108', for example. A buyer is matched with a seller of the two or more environmental offsets based, at least in part, on the received bid or ask quote. If the seller has an amount of environmental offsets sufficient for the trade, processor 102 is configured to execute a trade of an environmental offsets between the buyer and the seller, generically "investors" 110, 110'. Otherwise, a notification of insufficient environmental offsets to carry out the trade is provided to the buyer and seller, for example.

Processor 102 may also be configured to register, in structured database 105, an environmental offset to an owner, and to assign a unique identifier to the environmental offset to eliminate or at least make double-selling and double-accounting more difficult by specifically and uniquely identifying each offset credit so that there is no confusion as to the actual credit being sold, registered, or retired, and so that any attempted fraud would be more difficult to perpetrate. Such a unique identifier may be either a CUSIP or an ISIN identification number.

The CUSIP identifier is a 9-character alphanumeric security identifier distributed by the Committee on Uniform Security Identification Procedures for all North American securities in order to facilitate the clearing and settlement of trades, discussed further below. The International Securities Identifying Number (ISIN) uses a 12-character alpha-numerical code having a structure defined in ISO 6166 that also serves for uniform identification of a security at trading and settlement.

Further, processor 102 may be configured to credit a client account in structured database 105 with a traded environmental offset. For example, an offsetting credit and debit relating to the traded environmental offset may be entered into respective client accounts maintained in structured database 105.

In a further aspect, notification of the traded environmental offset may be provided to entities involved with the trade, for example, the buyer and seller 110 and/or broker/dealer 108. The notification may be in an electronic form provided via a known network configuration 112, for example, via e-mail which may include transaction details, or which may provide "online" access via a secure internet link, for example. In a further aspect, an electronic notification of a traded regulated environmental offset may be provided to a national registry 114 associated with the mandatory environmental offset via network 112, using a computer interface between processor 102 and national registry 114.

In another aspect, trade platform 100 may also cause a clearing and netting operation to occur to consolidate and report trades between buyer-seller pairs during a predetermined time period, for example, at the close of a trading day. As used in banking and finance, "clearing" denotes all activities from the time a commitment is made for a transaction until it is settled. Clearing may be necessary because the speed of trades could be much faster than the cycle time for completing the underlying transaction. In general, "netting" means to allow a positive value and a negative value to set-off and partially or entirely cancel each other out. As an example in the context of this disclosure, netting means a process which enables parties to a trade to settle only the net positions with one another at the end of a period of time, *e*.*g*., at the end of the day, in a single transaction, and not trade by trade. With proper accounting, this can be useful in situations where multiple trades are conducted between/by two broker/dealers 108, 108', and/or where large sums of money would otherwise be required to be transferred. Reports of the cleared/netted transactions may be provided by electronic form, *e*.*g*., via e-mail to parties associated with the trade, *i*.*e*., broker/dealers and/or investors (buyers/sellers). Reports may also be made via secure online (internet) access, or even by a paper report.

Furthermore, processor 102 may be configured to store information representing a physical offset certificate associated with a traded environmental offset into a book-entry form maintained in the structured database.

In another aspect, structured database 105 in memory 104 may be configured to store information relating to a plurality of environmental offsets established in the two or more different offset markets and established under two or more voluntary offset schemes including the Gold Standard, the Voluntary Carbon Standard (VCS), the Green-e standard, CCB standards, CCX, Plan Vivo, Climate Neutral Network, Greenhouse Friendly, WBCSD/WRI Protocol, CCAR, VER + standard, ISO 14064, VOS, Social Carbon, and DEFRA, for example, as listed in TABLE I, above.

In a further aspect, trading platform 100 may provide client position statements relating to one or more of the plurality of environmental offsets established in the two or more different offset markets. Such position statements may include information similar to that provided in known investment position statements, including, for example, the number and specific identification of each environmental offset credit, owner and/or seller information, and dates of purchase and/or sale of various offset credits, and the standard to which each credit was verified. The position statements may be provided by electronic form, *e*.*g*., via e-mail to the owner/client associated with the position, *i*.*e*., broker/dealers and/or investors (buyers/sellers). Reports may also be made via secure online (internet) access, or even by a paper report.

The trade platform, by its handling of multiple buyers/sellers (investors) and broker/dealers, as well as both regulated and voluntary offsets under different standards/protocols, potentially provides a strong position in the carbon markets, including emerging carbon markets in Canada, Australia, Japan, U.S. regional programs, and Carbon exchanges such as Chicago Climate Exchange (CCX), and creates opportunities for related opportunities in areas such as carbon fund administration, bridge and project financing, and as a service provider of consolidated carbon market data, since such consolidated market data does not exist. Services that may be provided to existing and future carbon funds by the trade platform and method of this disclosure include accounting, net asset value calculations, payments and cash management, as well as trade execution and project financing.

As the offset market evolves, particularly the voluntary offset market, short-selling, index funds, and other derivative products can be accommodated by the trade platform of this disclosure, with appropriate modifications to the structured database 105, for example, to account for any necessary margin accounts and/or other collateral arrangements or offset credit "loans" that might be determined to be desired or necessary under any applicable regulatory requirements.

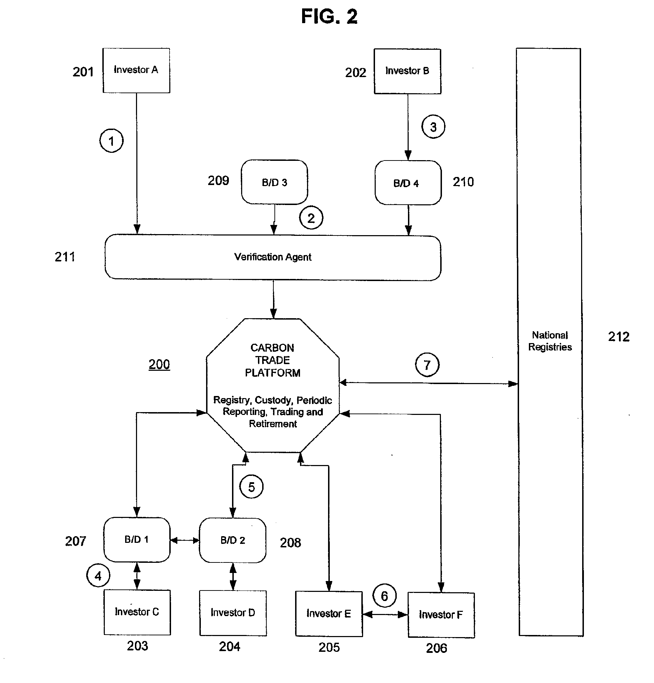

The trade platform of this disclosure may be as either a trading platform through which buyers and sellers execute their trades, or as a post-trade settlement platform which adjusts account balances after receiving notification of a trade, or with both functions in combination. The high-level process flow of FIG. 2 illustrates these two different embodiments of trade platform 200, which will now be discussed with reference to the circled numerals 1 through 7 in FIG. 2 and the variously identified elements.

The top portion of FIG. 2 illustrates a Primary Registration embodiment in which:
(1) Investor 201 (*e*.*g*. a corporation, a person, or other legal entity such as a carbon fund, or a broker/dealer acting on their own behalf in a so-called "principal transaction") may obtain emissions offsets including voluntary (VOSs) or regulated offsets (CERs, ERUs, etc.) directly by investing in projects, or by the purchase of pre-existing credits without having to deal directly with a project. Investor 201 would then submit the requisite documents through a verification agent 211 and register the verified offsets with the platform manager ("P/M") of trade platform 200 in a database (not shown in FIG. 2, but corresponding to database 105 in FIG. 1).
(2) Broker/dealer (B/D) 209 may obtain emissions offsets directly from its investments in projects. The B/D will submit the requisite documents through an appropriate verification agent 106 and register the verified offsets with P/M of trade platform 200.
(3) Investor 202 may obtains emissions offsets with the help of B/D 210. In this case, the responsible B/D 210 may serve as the liaison between the investor and the P/M of trade platform 200 to register the verified offsets.
   In another aspect, the bottom portion of FIG. 2 illustrates a secondary trading embodiment in which:
(4) Investor 203 may enter into a trade with another investor 204 through one or more B/D's 207, 208. The B/D 207 and/or B/D 208 will need to provide the P/M of trade platform 200 with the transaction details to record the transfer/retirement of offsets.
(5) A B/D 208 can enter into a trade with another a B/D 207. Both broker-dealers will need to provide the P/M of trade platform 200 with the transaction details to record the transfer/retirement of offsets.
(6) Investor 205 may enter into a trade with another investor 206, without going through a B/D. Both investors will need to provide the P/M of trade platform 200 with the transaction details to record the transfer/retirement of offsets.
(7) If registration with a national registry 212 is required for a regulated market offset credit, as is in the case for CERs, ERUs, the P/M of trade platform 200 may serve as an agent for the investor in transferring the necessary documentation to the relevant national registry 212 in either paper or electronic form via a computer interface over a network.

As discussed above, trade platform 200 depicted in FIG. 2 is suitable for executing trades between different investors with or without the assistance of a broker/dealer. Such trades may include trades of different types of offset credits that have been verified under different standards and/or by different verification agents 211.

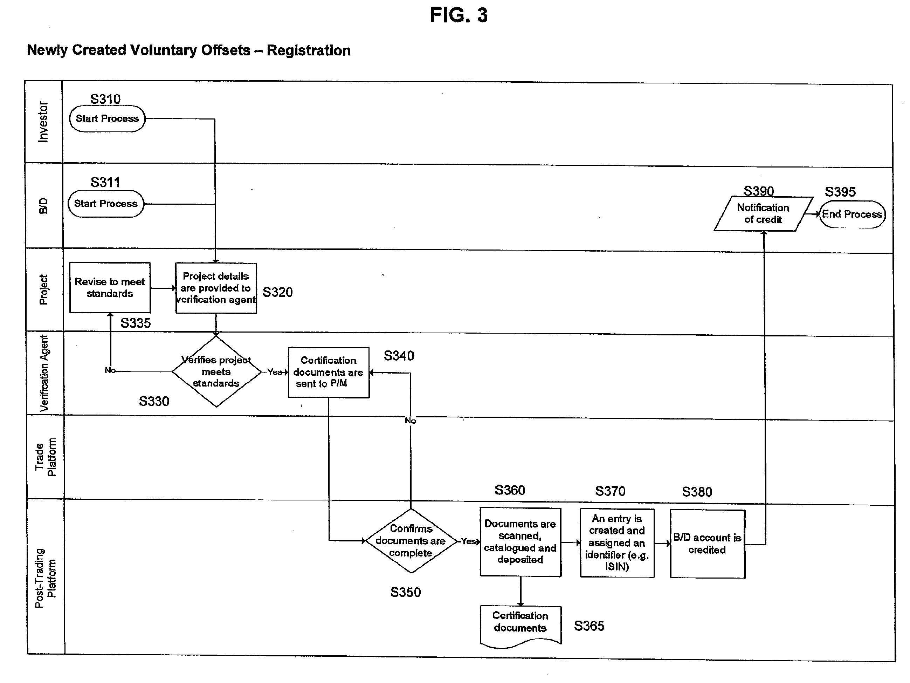

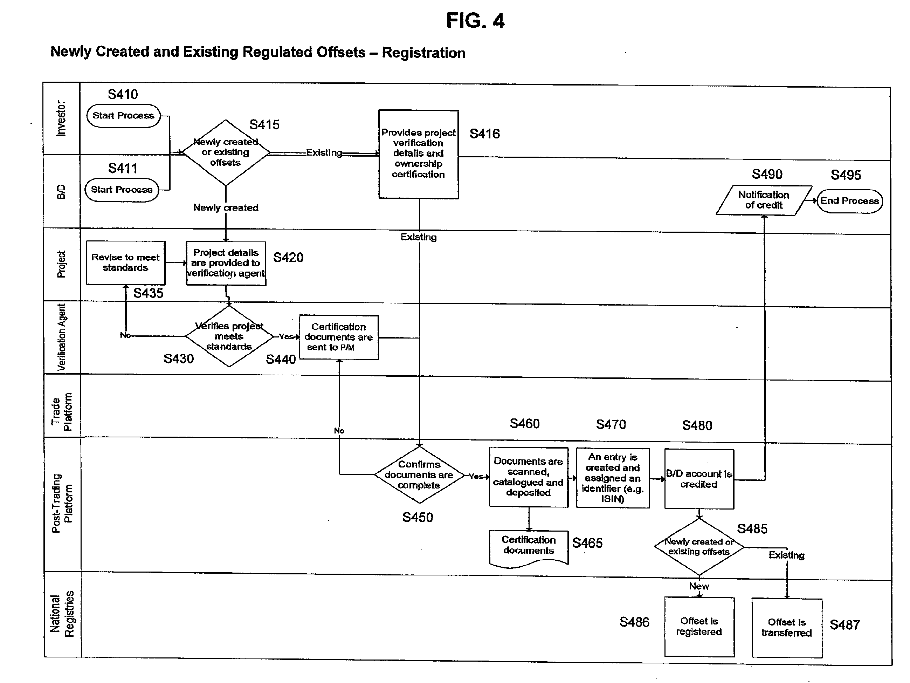

The functional flowchart of FIG. 3 depicts various steps in a process by which a newly created voluntary offset may be registered in database 105 of trade platform 100 or 200. It should be noted that registration could also relate to an existing verified offset credit, as discussed with respect to FIG. 4, below. The process for registration of a newly created voluntary offsets starts at step S310 for an investor acting without a broker/dealer, and the process starts at step S311 for a broker/dealer. The process is similar for an offset credit that already exists, as seen below in the discussion of FIG. 4. At step S320, the originator of the offset credit project provides project details to a verification agent. In step S330, the verification agent verifies whether the project meets the particular verification standard for the type of offset credit being established, *e*.*g*., VCS, VOS, the Gold Standard, etc. If in the judgment of the verification agent the project does not meet the applicable standard, then the project must revise the project criteria at step S335 to meet the standard.

If the verification agent confirms that the project meets verification standards, certification documents are sent in step S340 to the trade platform (in a post-trade embodiment) in either paper or electronic form so that confirmation can be made in step S350 that the documents are complete. These documents may be scanned and catalogued by the platform manager in step S360 and deposited as certification documents in step S365. The documents may be scanned into the structured database 105 of FIG. 1, for example. These documents may then be selectively retrieved from the database by authorized users via, for example, a web interface or by paper copies. At step S370, a corresponding entry relating to the created or registered offset is created (*e*.*g*., in database 105) and assigned a unique identifier (*e*.*g*., a CUSIP or ISIN identifier). At step S380, a broker/dealer account is credited, and a notification of the credit is provided to the broker/dealer at step S390. The process then ends at step S395.

The functional flowchart of FIG. 4 depicts various steps in a process by which either a newly created or an existing regulated offsets may be registered in database 105 of trade platform 100 or 200. Although similar in many respects to the process flow in FIG. 3, one difference in the functional flow of FIG. 4 is the interface with a national registry (e.g., registry 114 in FIG. 1 or 212 in FIG. 2). The process for registration of either newly created or existing regulated offsets starts at step S410 for an investor acting without a broker/dealer, and the process starts at step S411 for a broker/dealer. At step S415, a determination is made as to whether the offset credit already exists, or if it is a newly-established offset credit. If it is an existing credit, the investor or broker/dealer at step S416 provides project verification details and ownership certification to the trade platform manager (P/M).

If this is a new project and newly-created offset credit, the investor and/or broker/dealer of the offset credit project provides project details at step S420 to a verification agent. In step S430, the verification agent verifies whether the project meets the particular verification standard for the type of offset credit being established, *e*.*g*., VCS, VOS, the Gold Standard, etc. If in the judgment of the verification agent the project does not meet the applicable standard, then the project must revise the project criteria at step S4335 to meet the standard.

If the verification agent confirms that the project meets verification standards, certification documents are sent in step S440 to the trade platform (in a post-trade embodiment) in either paper or electronic form so that confirmation can be made in step S450 that the documents are complete. These documents may be scanned and catalogued by the platform manager in step S460 and deposited as certification documents in step S465. The documents may be scanned into the structured database 105 of FIG. 1, for example. At step S470, a corresponding entry relating to the created or registered offset is created (*e*.*g*., in database 105) and assigned a unique identifier (*e*.*g*., a CUSIP or ISIN identifier). At step S480, a broker/dealer account is credited. Further steps in the case of a regulated offset include determining or confirming at step S485whether the offset is newly-created or existing. If step S485 determines that it is a newly-created offset credit, then the offset is registered in the national registry associated with the offset credit at step S486. If it is a pre-existing offset credit, then an indication of ownership transfer is provided to the national registry associated with the offset credit at step S487. A notification of the offset credit or debit to/from a particular account is provided to the broker/dealer at step S490. The process then ends at step S495.

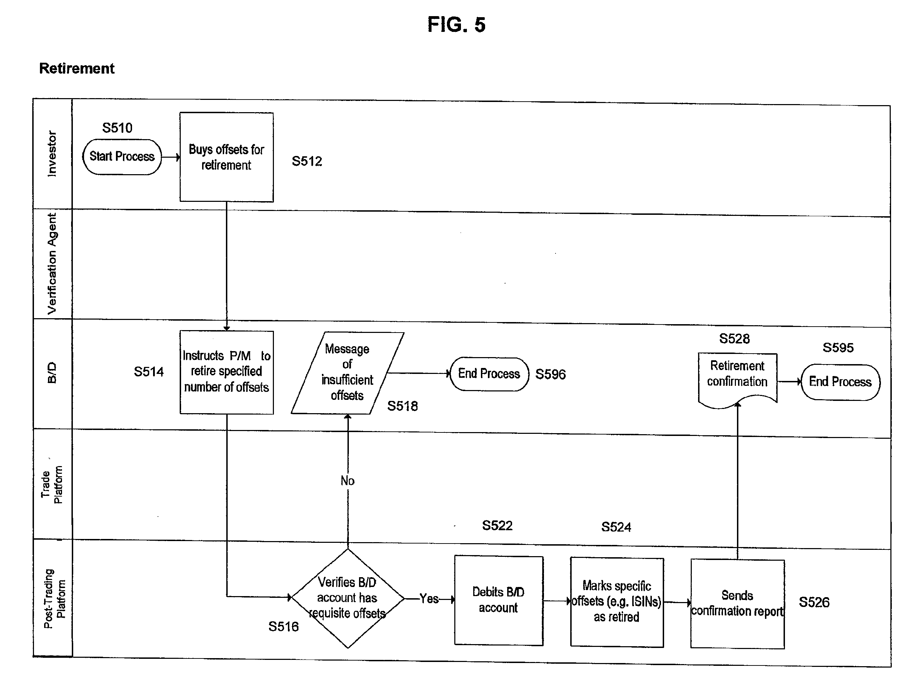

In the functional flowchart of FIG. 5, the retirement process for a voluntary offset credit is illustrated in which specifically identified offsets are retired by using the unique identifier associated with each offset, *e*.*g*., CUSIP and ISIN. By the process outlined in FIG. 5, specific offsets are retired, ensuring that no double-selling or double-accounting occurs. In this context, "retirement" refers to the final disposition or cancellation of offset credits that have been redeemed. For example, the investor (*e*.*g*., manufacturing company) may wish to offset a current amount of GHG emissions, rather than "bank" the emission offset credits for a future date.

The investor may use a B/D or they may directly deal with and instruct the P/M. If a B/D is used, the investor may start the retirement process at step S510, and then either buys an offset or offers an existing offset credit for retirement at step S512. At step S514, the broker/dealer (or investor, if dealing without a B/D) instructs the platform manager to retire a specific number of assets. The P/M verifies that the broker/dealer account has the requisite offsets at step S516. If there are not sufficient offset credits, then a message of insufficient offsets is sent to the broker dealer at step S518, and the process ends at step S596. If the broker/dealer account has the requisite offsets in their account, then the account is debited the appropriate amount at step S522, and specific offsets (*e*.*g*., identified by a CUSIP or ISIN number) are marked in the trade platform database at step S524 as being retired. The P/M sends a confirmation report to the B/D (*e*.*g*., by paper or e-mail) at step S526, the B/D confirms retirement of the offset credit at step S528, and the process ends at step S595.

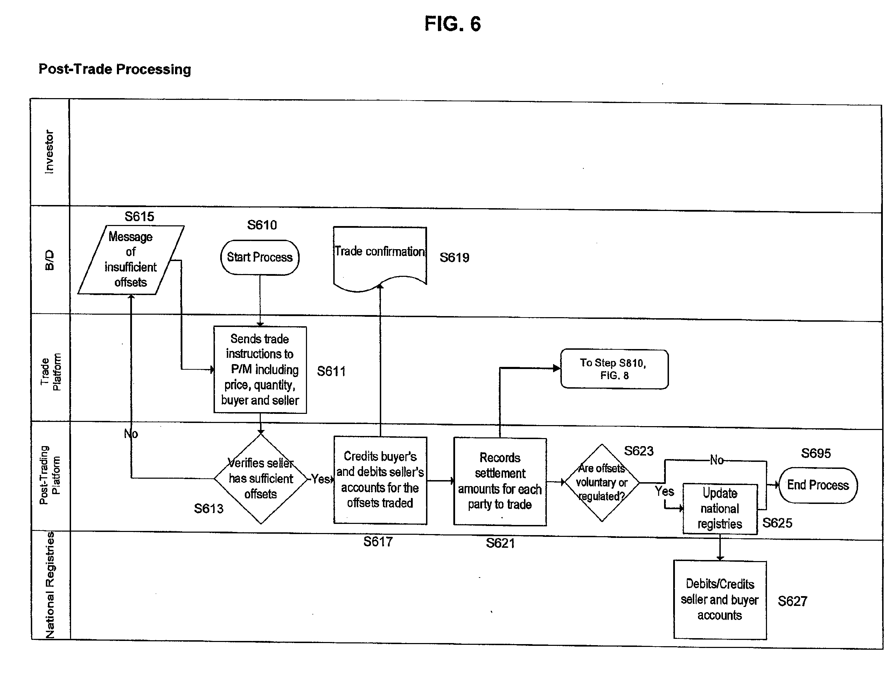

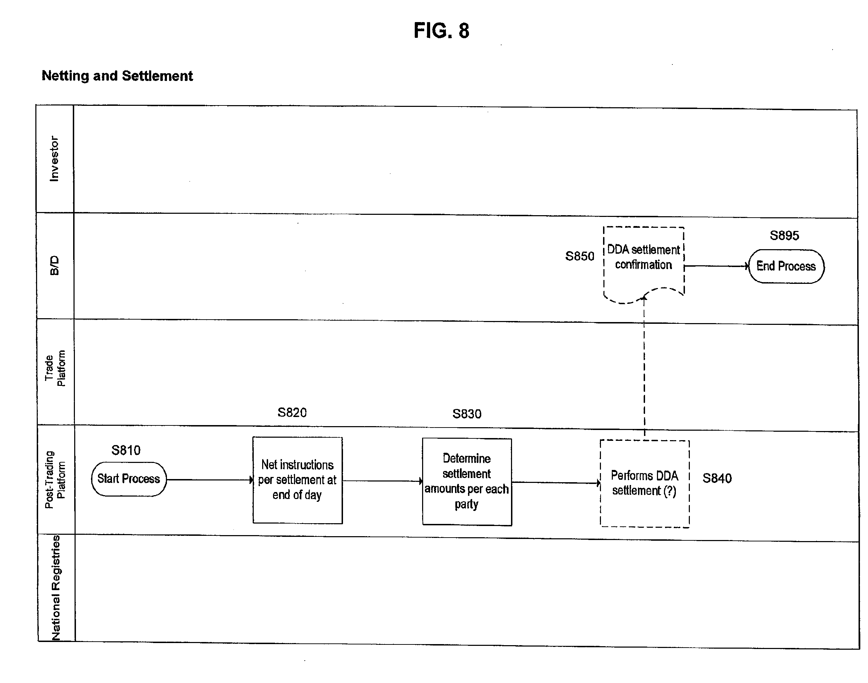

In an embodiment illustrated in FIG. 6, details of post-trade processing are highlighted and which may be commenced by a B/D or an investor at step S610. The B/D sends trade instructions to the trade platform manager (P/M) at step S611, including price, quantity, and the identity of the buyer and seller. The P/M verifies in step S613 that the seller has sufficient offsets in their account which may be maintained, for example, in database 105 of FIG. 1. If sufficient offsets are not available in the seller's account, the trade platform sends a message to the B/D at step S615 providing notification of the shortage. The broker/dealer may modify the trade order or otherwise resend trade instructions to the P/M by repeating step S611. If a sufficient number of offsets in the seller's account is verified at step S613, then the P/M credits the buyer's account and debits the seller's account for the offsets traded at step S617. Further, the P/M records settlement amounts for each party to trade at step S621. Optionally, a netting process may commence at step S810 of FIG. 8, discussed further below. Step S623 determines whether the traded offsets are voluntary or regulated. If voluntary, the process ends at step S695. If the offsets are regulated, the appropriate national registry is updated at step S625. In response to the update, the particular national registry appropriately debits/credits seller and buyer accounts at step S627.

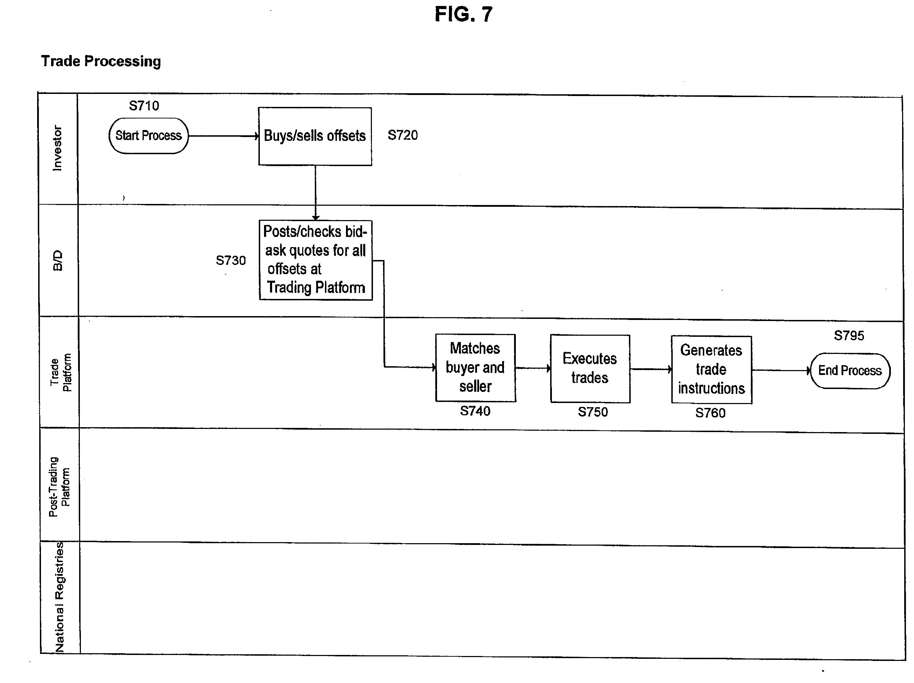

In an embodiment illustrated in FIG. 7, details of trade processing are highlighted and which is commenced by an investor at step S710, who requests in step S720 to buy or sell offsets. The investor or a broker/dealer may initiate posting or checking bid or ask quotes for the offsets with the trade platform at step S730. The trade platform searches its database to match a buyer with a seller at step S740, and executes the trade at step S750 and generates trade instructions at step S760. The trade process ends at step S795.

In FIG. 8, a netting and settlement sub-process is illustrated wherein the platform manager starts at step S810 and, and at step S820 determines the net instructions or net investment positions per settlement at the end of a period of time, e.g., at the end of a trading day. From this information, the P/M determines at step S830 the settlement amounts for each party that has engaged in trading. Optionally, Demand Deposit Account (DDA) settlement may occur at step S840, and DDA settlement confirmation may be sent to the appropriate B/D at step S850. DDA accounts are known in the art, and are analogous to an individual's checking account. All incoming and outgoing wires, Advances credits and debits, as well as any principal and interest payments from securities and advances may be posted into a DDA.

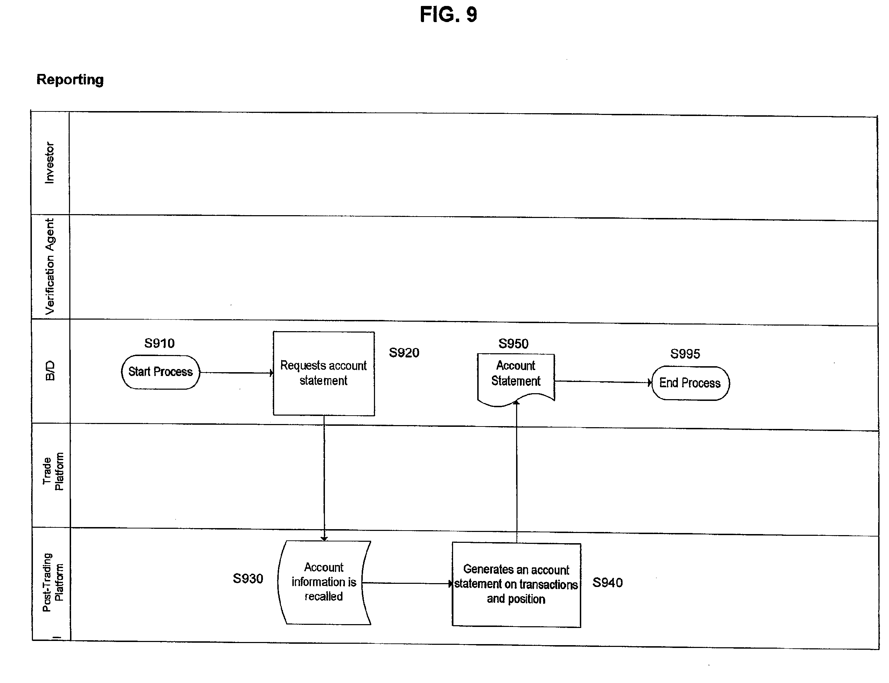

An aspect of an embodiment that provides reporting functionality is illustrated in FIG. 9. Either an investor or a B/D may start the process at steps S910 and S920 by requesting that the P/M of the trade platform (or post-trade platform) provide an account statement. The P/M recalls account information (*e*.*g*., from database 105 in FIG. 1) at step S930. At step S940, the trade platform generates an account statement on B/D transactions and position in one or more environment offsets. The P/M sends an account statement to the B/D at step S950. Such notification may be provided by an electronic-implemented notification via a computer interface and network by e-mail or via secure internet access, for example. The statement may be provided by paper or facsimile, either alone, or in conjunction with the electronic notification.

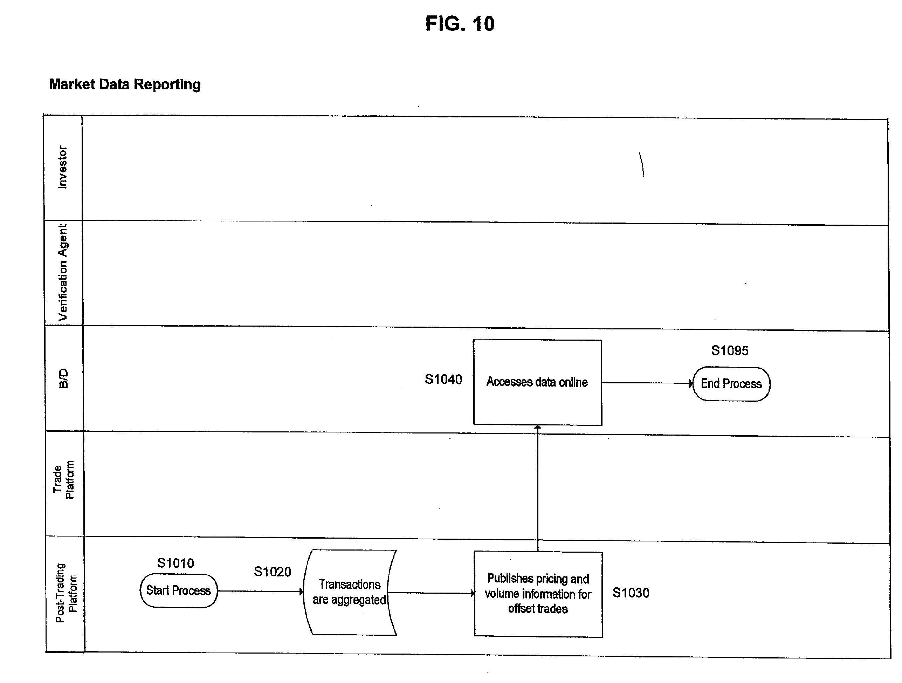

In order to achieve greater offset market transparency, the optional process illustrated in FIG. 10 may be used to disseminate market data. For example, the P/M causes the trade platform (or post-trade platform) to aggregate transactions at step S1020. Pricing and volume information may then be published at step S1030. Such publication may be by paper, or by electronic means such as e-mail, PDF files, or online access via a website, for example. In the latter example, broker/dealers may access the market data online at step S1040, via either secure or publicly accessible websites. Such market data may be made available by the platform manager for a fee, either per request, or on a continuing subscription basis.

As discussed above, the environmental offset may be a carbon offset, *e*.*g*., a verified voluntary offset such as a CFI carbon credit issued by the Chicago Climate Exchange, or the environmental offset may be a verified and regulated carbon offset, *e*.*g*., a Certified Emission Reduction (CER) compliant with the Kyoto Clean Development Mechanism (CDM). The environmental offset may be verified using a verification standard compliant with the Kyoto Clean Development Mechanism (CDM) or compliant with other certified verification agents. In another aspect, the offset may be a non-carbon related offset, such as an acid rain offset managed by the U.S. Environmental Protection Agency (EPA).

Other voluntary carbon offset verification protocols or standards accommodated by trade platform 100 include, but are not limited to standards listed in Table 1, *e*.*g*., the Gold Standard, the Voluntary Carbon Standard (VCS), the Green-e standard, CCB standards, Plan Vivo, Climate Neutral Network, Greenhouse Friendly, WBCSD/WRI Protocol, CCAR, VER + standard, ISO 14064, VOS, Social Carbon, and DEFRA standards.

One unique aspect of the trade platform and method of this disclosure is that a plurality of environmental offsets may be registered to different respective owners, even if two or more of the environmental offsets have been verified under different voluntary standards and are generally traded on two or more different carbon offset exchanges.

In another aspect of this embodiment, in order to reduce the paper storage and transfer requirements, a physical offset certificate associated with the traded environmental offset is converted into a book-entry form maintained in the database, thus facilitating electronic data transfer representing the buying and selling of an offset. These offsets can be established under a regulated mandatory offset scheme or under a voluntary offset scheme.

In a further aspect, a record of current and historical offset positions for one or more clients and market prices may be stored in the database, and such information may be retrieved and formatted into paper or electronic reports, including e-mail reports to a client or other entity. Online access may also be made available. Such data reporting may include client position statements relating to one or more of the plurality of environmental offsets established in the two or more different offset markets. An exemplary market data reporting process is illustrated in FIG. 10.

Although FIGS. 3-10 distinguish between the "Trading Platform" and the "Post-Trade Platform" as functional entities, these aspects of the various embodiments discussed above may either be considered as being performed in separate functional blocks, or may be conceptually combined into one functional block, *i*.*e*., as a post-trade platform that provides accounting and reporting functions, or as a complete trade processing platform that executes trades as well as providing accounting and reporting functions.

In another aspect, the environmental offset is not limited to carbon offsets of either the regulated or voluntary type, but the offset may be an acid rain offset, for example, managed by the U.S. Environmental Protection Agency.

Although there are several existing voluntary standards in place as exemplified by TABLE I, as new voluntary and/or regulated standards evolve, the trading platform and method of this disclosure may be adapted to accommodate any new standards without extensive changes being required.

In a further embodiment, there may be a need to convert an existing credit created under a first standard, either voluntary or regulated, into a credit issued under a different standard. Of course, any newly-registered credit would have to be retired from the original offset credit scheme, and re-registered after verification under the new standard. The new offset credit may be equivalent to the first offset credit at least in terms of representing a desired reduction in emissions or some other agreed upon criteria.

Such a conversion of credits may find great usefulness as the environmental offset markets, including the carbon offset markets, continue to evolve and mature.

The above-discussed embodiments and aspects of this disclosure are not intended to be limiting, but have been shown and described for the purposes of illustrating the functional and structural principles of the inventive concept, and are intended to encompass various modifications that would be within the spirit and scope of the following claims.

Embodiments of the present invention have been described with particular reference to the examples illustrated. However, it will be appreciated that variations and modifications may be made to the examples described within the scope of the present invention.

## Claims

1. A method for enabling control and limit of environmental emissions, the method comprising a computer implemented method of trading and accounting for environmental offset credits established in two or more different offset markets, the method comprising:
registering, in a database, a plurality of environmental offset credits established in the two or more different offset markets;
assigning each of said plurality of environmental offset credits with a unique identifier;
receiving a bid or ask quote for one of the plurality of environmental offsets established in one of the two or more different offset markets;
matching a buyer with a seller of said one of the plurality of environmental offset credits based, at least in part, on the received bid or ask quote;
if the seller has an amount of environmental offset credits sufficient for a trade, executing a trade of said one of the plurality of environmental offset credits between the buyer and the seller; and
otherwise, providing a notification of insufficient environmental offset credits to carry out the trade to at least the seller.

2. The method of claim 1, further comprising entering an offsetting credit and debit of the traded environmental offset credit to respective client accounts maintained in the database.

3. The method of any of claim 1 or 2, further comprising providing a notification of the traded environmental offset credit to a national registry associated with said one of the plurality of environmental offset credits.

4. The method of claim 1, further comprising performing a clearing and netting operation to consolidate and report trades between at least a first buyer-seller pair during a predetermined time period.

5. The method of any of claims 1 to 4, further comprising storing, in the database, a record of current and historical offset credit positions and prices for one or more clients.

6. The method of any of claims 1 to 5, further comprising providing client position statements relating to one or more of the plurality of environmental offset credits established in the two or more different offset markets.

7. The method of any of claims 1 to 6, further comprising, prior to said executing a trade, confirming that related offset documentation is complete, and scanning said completed related offset documentation to said database.

8. A computer-implemented platform useful in controlling and limiting environmental emissions for environmental offset credit trades made in two or more offset markets, the trading platform comprising:
one or more processors;
a memory operatively coupled to the one or more processors, said memory comprising a structured database therein configured to store information relating to one or more environmental offset credits established in the two or more different offset markets;
an interface to the one or more processors configured to forward a bid and/or ask quote for one of the two or more environmental offset credits to said one or more processors, said one or more processors matching a buyer with a seller of said one of the two or more environmental offset credits based, at least in part, on the received bid or ask quote,
said one of the two or more environmental offset credits being established in one of the two or more different offset markets;
wherein, if the seller has an amount of environmental offset credits sufficient for the trade, the one or more processors generates a signal that indicates, to at least the seller, that sufficient environmental offsets are available to carry out a trade of said one of the two or more environmental offset credits between the buyer and the seller, and
wherein, if the seller does not have an amount of environmental offset credits sufficient for the trade, the one or more processors generates a signal that indicates, to at least the seller, that insufficient environmental offsets are available to carry out the trade, thereby controlling and limiting environmental emissions.

9. The computer-implemented platform of claim 8, wherein the one or more processors executes a trade of said one of the two or more environmental offset credits between the buyer and the seller if the seller has an amount of environmental offset credits sufficient for the trade.

10. The computer-implemented platform of claim 9, wherein the one or more processors are configured to credit a client account, in the structured database, with a traded environmental offset credit.

11. The computer-implemented platform of claim 9, wherein the one or more processors are configured to compute an offset credit amount and cash value to be applied to the executed trade.

12. The computer-implemented platform of claim 9, wherein the one or more processors are configured to enter an offsetting credit and debit of the traded environmental offset credit into respective client accounts maintained in the structured database.

13. The computer-implemented platform of claim 9, wherein the one or more processors are configured to provide, via a computer network, an electronic notification of the traded environmental offset credit to a national registry associated with a traded environmental offset credit.

14. The computer-implemented platform of any of claims 8 to 13, wherein the one or more processors are configured to register, in the structured database, an environmental offset credit to an owner thereof and to assign a unique identifier to the environmental offset credit.

15. The computer-implemented platform of any of claims 8 to 14, wherein the one or more processors are configured to provide client position statements relating to one or more of the plurality of environmental offset credits established in the two or more different offset markets.
